# EUROPEAN PATENT APPLICATION

(11) **EP 4 782 870 A1**
(43) Date of publication of application: **29.07.2026**
(21) Application number: 24867320.4
(22) Date of filing: 09.09.2024
(51) Int. Cl.: G01S 7/02, G01S 13/88, G01S 7/481, F16M 11/12

(54) **PITCHING-REFLECTING 3D SCANNING RADAR**

(30) Priority: 22.09.2023 CN 202311226198
(71) Applicant: BEIJING RETTAR TECHNOLOGY CO., LTD, Beijing 100744 (CN)
(72) Inventor: HU, Xiushan, Beijing 100123 (CN); LI, Yuanyuan, Tianjin 300134 (CN)
(74) Representative: Meyer-Dulheuer MD Legal Patentanwälte PartG mbB
(86) International application number: PCT/CN2024/117658
(87) International publication number: WO 2025/060908

(57) **Abstract**

The present disclosure provides a pitch-reflective 3D scan radar. The 3D scan radar comprises a horizontal revolution mechanism, a detection circuit, a signal reflection mechanism, and a pitch rotation mechanism. The pitch rotation mechanism is positioned at a first predetermined position of the horizontal revolution mechanism, while the detection circuit is fixed at a second predetermined position of the horizontal revolution mechanism. The signal reflection mechanism is fixed to a first mounting position of a rotating shaft. The horizontal revolution mechanism drives the detection circuit, the signal reflection mechanism and the pitch rotation mechanism to perform synchronized horizontal rotation. On the one hand, the disclosure performs a 3D scan measurement of materials through the detection circuit, the horizontal revolution mechanism, the signal reflection mechanism, and the pitch rotation mechanism; whilst simultaneously securing the entire detection circuit to the horizontal revolution mechanism. On the other hand, the detection circuit is entirely fixed to the horizontal revolution mechanism. Therefore, all components of the detection circuit execute synchronized horizontal motion. Even where cables connect these components, the cables remain entirely unaffected, thereby reducing cable degradation, enhancing the reliability of the 3D scan radar and extending the operational lifespan.

## Description

### FIELD

The present disclosure relates to a field of a 3D measurement technology, particularly to a pitch-reflective 3D scan radar.

### BACKGROUND

3D scan radar offers numerous advantages including safety, efficiency, and environmental friendliness, leading to its widespread adoption in processes such as 3D (three-dimensional) measurements of media in an industrial manufacturing field and other fields. However, constrained by the functional design and implementation of the radar itself, the structures of most existing 3D scan radars involve key components that frequently undergo motion or bending, resulting in reduced product reliability and service life.

For instance, conventional 3D scan radars typically mount a high-frequency board onto an antenna, with the microwave signals generated by the high-frequency board being transmitted via the antenna. Simultaneously, the antenna is often fixed to a pitch motion device or a pitch motion bracket. The pitch motion device or bracket connects to a horizontal motion device or a horizontal motion bracket and moves horizontally with the motion of the horizontal motion device or a horizontal motion bracket. This arrangement enables the antenna to transmit microwave signals from multiple angles across two dimensions, thereby performing the 3D measurement. However, as the main control board of the 3D scan radar is usually positioned on the horizontal motion device or the horizontal motion bracket, a relative motion occurs between the main control board and the high-frequency board. This causes significant losses in the communication cables, power supply cables or other cables for connecting the two boards due to the relative movement.

### SUMMARY

Embodiments of the present disclosure provide a pitch-reflective 3D scan radar to simplify and optimize the structure of 3D scan radars, enhance their reliability, and extend the service life.

The embodiments of the present disclosure provide a pitch-reflective 3D scan radar, comprising a horizontal revolution mechanism, a detection circuit, a signal reflection mechanism, and a pitch rotation mechanism.

The pitch rotation mechanism is disposed at a first predetermined position of the horizontal revolution mechanism, and a rotating shaft of the pitch rotation mechanism is controlled to rotate in a pitch direction.

The detection circuit is fixed at a second predetermined position of the horizontal revolution mechanism, at least generates and transmits measurement signals and receives return signals, and calculates material-level parameters of a material surface within a container based on the measurement signals and the return signals.

The signal reflection mechanism is fixedly connected to a first mounting position of the rotating shaft and forms a predetermined fixed angle with respect to a transmission direction of the measurement signals generated by the detection circuit, the signal reflection mechanism is used to, with a revolution of the horizontal revolution mechanism and the rotation of the pitch rotation mechanism, reflect the measurement signals transmitted by the detection circuit to at least one measurement point of the material surface, and the signal reflection mechanism is further used to reflect the return signals to the detection circuit and the detection circuit receives the return signals to obtain the material-level parameters of the at least one measurement point, wherein the at least one measurement point reflects the measurement signals to form the return signals.

The horizontal revolution mechanism drives the detection circuit, the signal reflection mechanism and the pitch rotation mechanism to rotate synchronously in the horizontal direction when the horizontal revolution mechanism is controlled to rotate in a horizontal direction.

Optionally, the 3D scan radar further comprises a waveguide structure.

The waveguide structure is fixedly connected to the detection circuit and/or the horizontal revolution mechanism, the waveguide structure is used to direct the measurement signals transmitted by the detection circuit towards the signal reflection mechanism, the signal reflection mechanism then reflects the measurement signals to the at least one measurement point, the at least one measurement point reflects the measurement signals to form the return signals, the signal reflection mechanism reflects the return signals to the waveguide structure, and the waveguide structure directs the return signals to detection circuit.

Optionally, the 3D scan radar further comprises an antenna structure.

The antenna structure is fixed to a second mounting position of the rotating shaft by a connecting member, a relative position of the antenna structure and the signal reflection mechanism remains unchanged, the antenna structure is used to converge and amplify the measurement signals reflected by the signal reflection mechanism and then transmit the measurement signals, wherein with the revolution of the horizontal revolution mechanism and the rotation of the pitch rotation mechanism, the measurement signals reach the at least one measurement points, and the antenna structure is also used to guide the return signals formed by the at least one measurement points to the signal reflection mechanism, wherein the return signals are reflected by the signal reflection mechanism, and ultimately received by the detection circuit.

Optionally, the 3D scan radar further comprises a counterweight balancing member.

The counterweight balancing member is fixed at a third mounting position of the rotating shaft and used to balance a weight of the antenna structure.

The second mounting position and the third mounting position are respectively located on axially symmetrical opposite sides of the rotating shaft.

Optionally, the detection circuit comprises a signal transceiver circuit and a main control circuit.

The signal transceiver circuit and the waveguide structure are disposed opposite to each other, the signal transceiver circuit is used to generate the measurement signals and receive the return signals, the measurement signals generated by the signal transceiver circuit are directionally transmitted via the waveguide structure to the signal reflection mechanism, after reflection by the signal reflection mechanism, the measurement signals reach the at least one measurement point of the material surface, and the return signals formed by the at least one measurement point of the material surface are reflected by the signal reflection mechanism and directionally guided by the waveguide structure to the signal transceiver circuit.

The main control circuit is mounted on the horizontal revolution mechanism, the main control circuit remains in a fixed relative position with respect to the signal transceiver circuit, the horizontal revolution mechanism and the pitch rotation mechanism, cables connecting the main control circuit with the signal transceiver circuit, the horizontal revolution mechanism and the pitch rotation mechanism do not undergo a relative movement, the main control circuit is at least used to provide control, communication and/or power supply functions for the signal transceiver circuit, the horizontal revolution mechanism and the pitch rotation mechanism, enabling a normal operation of the signal transceiver circuit, the horizontal revolution mechanism and the pitch rotation mechanism, and the main control circuit is used to acquire revolution information of the horizontal revolution mechanism, a rotation information of the pitch rotation mechanism and the return signals transmitted by the signal transceiver circuit, and obtain the material-level parameters of the at least one measurement point of the material surface based on the revolution information, the rotation information and the return signals.

Optionally, the 3D scan radar further comprises an angle monitoring module.

The angle monitoring module is fixedly connected to the rotating shaft, the signal reflection mechanism or the antenna structure, and is electrically connected to the main control circuit, the angle monitoring module is used to acquire actual rotation angle parameters of the 3D scan radar in the pitch direction, enabling the main control circuit to calibrate and correct the rotation information of the pitch rotation mechanism in the pitch direction based on the actual rotation angle parameters; and the angle monitoring module is used to obtain actual revolution angle parameters of the horizontal revolution mechanism in the horizontal direction.

The actual rotation angle parameters at least comprise rotation angles or rotation steps, and the actual revolution angle parameters at least comprise revolution angle or revolution steps.

Optionally, the main control circuit is mounted on the horizontal revolution mechanism, the main control circuit remains a fixed relative position with respect to the signal transceiver circuit, the horizontal revolution mechanism and the pitch rotation mechanism, the cables connecting the main control circuit to the signal transceiver circuit, the horizontal revolution mechanism, and the pitch rotation mechanism do not undergo the relative movement, the main control circuit is electrically connected to the angle monitoring module, and is at least used to realize the control, communication and/or power supply functions with the signal transceiver circuit, the horizontal revolution mechanism, the pitch rotation mechanism and the angle monitoring module, enabling the normal operation of the signal transceiver circuit, the horizontal revolution mechanism, the pitch rotation mechanism and the angle monitoring module.

The main control circuit is used to obtain the actual rotation angle parameters and the actual revolution angle parameters from the angle monitoring module, obtain the return signals from the signal transceiver circuit, and obtain the material-level parameters of at least one measurement point of the material surface.

Optionally, the 3D scan radar further comprises a host computer.

The host computer is connected to the main control circuit to receive the material-level parameters from said main control circuit, the revolution information from the horizontal revolution mechanism, and the rotation information from said pitch rotation mechanism, to analyze a 3D spatial information of the material surface.

Alternatively, the host computer is connected to both the main control circuit and the angle monitoring module to receive the material-level parameters from the main control circuit, the actual rotation angle parameters and the actual revolution angle parameters from the angle monitoring module, and, to analyze the 3D spatial information of the material surface.

Optionally, the 3D scan radar further comprises a housing and a cover.

The housing is fixedly connected to the cover to form a sealed space.

The horizontal revolution mechanism, the detection circuit, the signal reflection mechanism, and the pitch rotation mechanism are all disposed within the sealed space, and The cover is configured to be penetrated by the measurement signals and the return signals.

Optionally, the rotating shaft is controlled to continuously rotates along a first predetermined direction in the pitch direction.

The detection circuit is configured to identify the measurement signals and the return signals corresponding to a continuous rotation of the rotating shaft within a predetermined rotational range, and calculate the material-level parameters of the material surface within the container based on the measurement signals and the return signals.

Optionally, the rotating shaft is controlled to perform a reciprocating rotation within a first predetermined range.

Optionally, the horizontal revolution mechanism is controlled to continuously rotate along a second predetermined direction in the horizontal direction.

Alternatively, the horizontal revolution mechanism is controlled to perform a reciprocating rotation within a second predetermined range in the horizontal direction.

The technical solution provided by the embodiments of the present disclosure generates and transmits the measurement signals via the detection circuit. Since the signal reflection mechanism is fixedly connected to the first mounting position of the rotating shaft of the pitch rotation mechanism, when the rotating shaft rotates in the pitch direction, the signal reflection mechanism follows the rotating shaft in the pitch direction. Furthermore, since the transmission direction of the measurement signals generated by the detection circuit form the predetermined fixed angle with respect to the signal reflection mechanism, the measurement signals reflected by the signal reflection mechanism will form multiple transmission angles in the pitch direction. After transmission, the measurement signals reflected by the signal reflection mechanism will reach the multiple measurement points on the material surface located in the pitch direction. The measurement signals having the different transmission angles correspondingly generate the return signals at their respective measurement points. The return signals are reflected back towards the signal reflection mechanism and are subsequently reflected once more by the mechanism towards the detection circuit, thereby achieving 3D scan radar measurement in the pitch direction.

Furthermore, as the pitch rotation mechanism is positioned at the first predetermined position on the horizontal revolution mechanism, and the detection circuit is fixed at the second predetermined position on the horizontal revolution mechanism, with the signal reflection mechanism fixedly connected to the first mounting position of the rotating shaft of the pitch rotation mechanism, during the horizontal revolution of the horizontal revolution mechanism, the detection circuit, the signal reflection mechanism, and the pitch rotation mechanism will synchronously rotate horizontally in tandem with the horizontal revolution mechanism. Consequently, the measurement signals reflected by the signal reflection mechanism will also form the multiple transmission angles in the horizontal direction. After transmission, these measurement signals, reflected by the signal reflection mechanism, will reach the multiple measurement points on the material surface located in the horizontal direction. The measurement signals having the different transmission angles correspondingly generate the return signals at their respective measurement points. The return signals are reflected back towards the signal reflection mechanism and are subsequently reflected again by the mechanism towards the detection circuit. This achieves the horizontal scan measurement for the 3D scan radar. Ultimately, the detection circuit integrates all the measurement signals and the return signals to calculate the material-level parameters of the material surface within the container.

It is thus evident that the embodiments of the present disclosure achieve the 3D scan measurement of the material surface within the container in both the horizontal and pitch directions through the coordinated operation of the detection circuit, the horizontal revolution mechanism, the signal reflection mechanism, and the pitch rotation mechanism. Furthermore, the embodiments fix the entire detection circuit (equivalent to the main control board and the high-frequency board in the prior art) onto the horizontal revolution mechanism. Thereby ensuring the synchronous horizontal movement of both the main control board and the high-frequency board without a relative motion between them. Consequently, any communication or power cables connecting the two boards remain entirely unaffected, minimizing cable degradation. This enhances the reliability of the 3D scan radar and extends the operational lifespan of the 3D scan radar.

It should be understood that the content described herein is not intended to identify key or essential features of embodiments of the present disclosure, nor is it intended to limit the scope of the present disclosure. Other features of the present disclosure will become readily apparent from the following description.

### BRIEF DESCRIPTION OF THE DRAWINGS

To more clearly illustrate the technical solutions of the embodiments of the present disclosure, the drawings for describing the embodiments are briefly introduced below. It is evident that the drawings described below merely represent some embodiments of the present disclosure. For those skilled in the art, other drawings may be derived from these drawings without creative effort.
Fig. 1 is a schematic diagram illustrating the structure of a pitch-reflective 3D scan radar provided by an embodiment of the present disclosure.
Fig. 2 is a schematic diagram of another structure of the pitch-reflective 3D scan radar provided by an embodiment of the present disclosure.
Fig. 3 is a schematic diagram illustrating the structure of yet another embodiment of the pitch-reflective 3D scan radar provided by the present disclosure.
Fig. 4 is a schematic diagram of yet another structure of a pitch-reflective 3D scan radar provided by an embodiment of the present disclosure.

### DETAILED DESCRIPTION

To enable those skilled in the art to better understand the present disclosure, the technical solutions of the embodiments herein shall be described clearly and completely with reference to the accompanying drawings. It should be understood that the embodiments described herein represent only a portion of the possible implementations of the present invention, not an exhaustive list. All other embodiments obtained by persons skilled in the art based on the embodiments of the present disclosure, without requiring creative labor, shall fall within the scope of protection of the present disclosure.

It should be noted that the terms "first", "second", and similar designations used in the description, claims, and accompanying drawings of the present disclosure serve to distinguish similar objects and are not intended to denote any particular sequence or order. It should be understood that such designations may be interchanged where appropriate, such that the embodiments of the present disclosure described herein may be implemented in sequences other than those illustrated or described herein. Furthermore, the terms "comprise" and "have", and any variations thereof, are intended to cover non-exclusive inclusion. For example, a process, method, system, product, or apparatus comprising a series of steps or units need not be limited to those steps or units explicitly listed, but may include other steps or units not explicitly listed or inherent to such processes, methods, products, or apparatus.

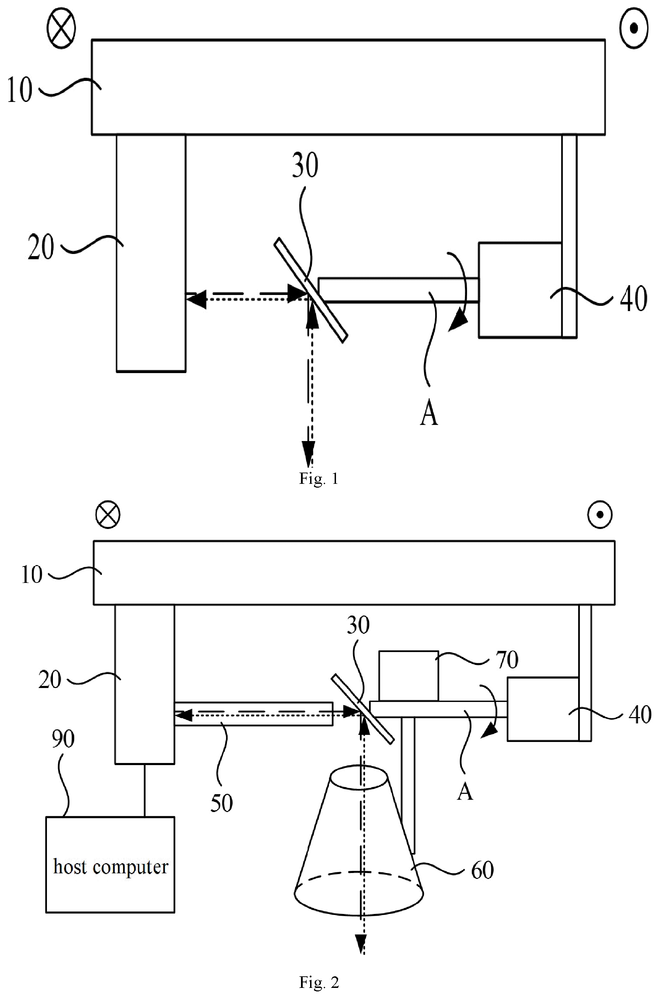

Fig. 1 is a structural diagram illustrating the structure of a pitch-reflective 3D scan radar provided by one embodiment of the present disclosure. Referring to Fig. 1, the pitch-reflective 3D scan radar comprises a horizontal revolution mechanism 10, a detection circuit 20, a signal reflection mechanism 30, and a pitch rotation mechanism 40.

The pitch rotation mechanism 40 is positioned at a first predetermined position of the horizontal revolution mechanism 10, and a rotating shaft A of the pitch rotation mechanism rotates in a pitch direction.

The detection circuit 20 is fixed at a second predetermined position of the horizontal revolution mechanism 10. The detection circuit 20 is at least used to generate and transmit measurement signals, and to receive return signals. The detection circuit 20 may calculate material-level parameters of a material surface within a container based on the measurement signals and the return signals.

The signal reflection mechanism 30 is fixedly connected to a first mounting position of the rotating shaft A and is oriented at a predetermined fixed angle relative to a transmission direction of the measurement signals generated by the detection circuit 20. The signal reflection mechanism 30 is used to reflect the measurement signals to at least one measurement point on the material surface, with the rotation of the horizontal revolution mechanism 10 and the pitch rotation mechanism 40. The signal reflection mechanism 30 is also used to reflect the return signals back to the detection circuit 20 for reception. The return signals are formed when the at least one measurement point reflect the measurement signals. The detection circuit 20 receives the return signals to generate material-level parameters for the at least one measurement point of the material surface.

The horizontal revolution mechanism 10 drives the detection circuit 20, the signal reflection mechanism 30, and the pitch rotation mechanism 40 to perform a synchronized horizontal rotation, during being rotated in the horizontal direction.

According to measurement principles, 3D scan radars may be categorized into 3D microwave scan radars, 3D laser scan radars, and so forth. Different types of the 3D scan radars require to select of the signal reflection mechanism 30 that is compatible with the types. For example, when the 3D scan radar is the 3D microwave scan radar, both the measurement signals and the return signals are microwave signals. The signal reflection mechanism 30 may be fabricated from materials capable of reflecting microwave signals, such as carbon fiber reinforced polymer (CFRP) or metal. When the 3D scan radar is the 3D laser scan radar, both the measurement signals and the return signals are laser signals. The signal reflection mechanism 30 may employ a laser reflector.

It should be understood that the horizontal revolution mechanism 10 may be a horizontal rotation platform, a shape of which may be circular, square, elliptical, etc. The pitch rotation mechanism 40 may be a motor (e.g., a miniature motor). The rotating shaft A of the pitch rotation mechanism 40 refers to a motor rotating shaft. The material-level parameters of the material surface within the container may include a maximum level value, a minimum level value, an average level value, a material mass, and/or a material volume. The material-level parameters of the measurement point may be material-level values of the material at the measurement point.

The container may be a tank or silo being capable of holding the material, or other similar apparatus or equipment. Taking industrial production equipment as an example, the container of the embodiments of the present disclosure may include, but is not limited to, components such as reaction vessels and storage silos of the production equipment. The state of the material may be solid, liquid, or solid-liquid mixture, etc.

In one embodiment of the present disclosure, the predetermined fixed angle may be an acute angle formed between the transmission direction of the measurement signals and one end of the signal reflection mechanism 30 being adjacent to the detection circuit 20. For example, the acute angle may be 30°, 45°, or 60°, etc. Conversely, in another embodiment of the present disclosure, the predetermined fixed angle may also be an obtuse angle formed between the transmission direction of the measurement signals and the other end of the signal reflection mechanism 30 being remote from the detection circuit 20. For example, the obtuse angle may be 150°, 135°, or 120°, etc. It should be understood that the first predetermined position, the second predetermined position, the first mounting position, and the predetermined fixed angle may be adaptively adjusted according to actual application conditions of the 3D scan radars and desired measurement results. The embodiments of the present disclosure are not restricted in this regard.

By way of example, the operating principle of the 3D scan radar may be described as follows.

The detection circuit 20 continuously or intermittently generates and transmits the measurement signals. Because the signal reflection mechanism 30 is fixedly connected to the first mounting position of the rotating shaft A of the pitch rotation mechanism 40, the signal reflection mechanism 30 is rotated by the rotation of the rotating shaft A in the pitch direction. Furthermore, because the transmission direction of the measurement signals generated by the detection circuit 20 forms the predetermined fixed angle with the signal reflection mechanism 30, the measurement signals reflected by the signal reflection mechanism 30 can form a plurality of transmission angles in the pitch direction. After being transmitted by the detection circuit 20 and reflected by the signal reflection mechanism 30, the measurement signals will reach a plurality of measurement points of the material surface located in the pitch direction. The measurement signals having different transmission angles correspondingly generate the return signals at the plurality of measurement points. These return signals are reflected back to the signal reflection mechanism 30 and are reflected by the signal reflection mechanism 30 to the detection circuit 20. The detection circuit 20 can then calculate the material-level parameters for the at least one measurement point of the material surface located in the pitch direction, thereby achieving the scan measurement in the pitch direction for the 3D scan radar.

Furthermore, because the pitch rotation mechanism 40 is positioned at the first predetermined position of the horizontal revolution mechanism 10, the detection circuit 20 is fixed at the second predetermined position of the horizontal revolution mechanism 10, and the signal reflection mechanism 30 is fixedly connected to the first mounting position of the rotating shaft A of the pitch rotation mechanism 40, the detection circuit 20, the signal reflection mechanism 30 and the pitch rotation mechanism 40 will synchronously rotate horizontally with the horizontal revolution mechanism 10 during the horizontal rotation of the horizontal revolution mechanism 10. Consequently, the measurement signals reflected by the signal reflection mechanism 30 will form the plurality of transmission angles in a horizontal plane. These measurement signals, transmitted by the detection circuit 20 and reflected by the signal reflection mechanism 30, will reach the plurality of measurement points of the material surface located in the horizontal direction. The measurement signals having different transmission angles will correspondingly generate return signals at their respective measurement points. These return signals are reflected back to the signal reflection mechanism 30 and are again reflected by the signal reflection mechanism 30 to the detection circuit 20. The detection circuit 20 can then calculate the material-level parameters for the at least one measurement point of the material surface located in the horizontal direction, thereby achieving the horizontal scan measurement with the 3D scan radar. Ultimately, the detection circuit 20 integrates the material-level parameters of all measurement points to calculate the material-level parameters of the material surface within the container.

In summary, the embodiments of the present disclosure can perform a 3D scan measurement of the material surface within the container in both horizontal and pitch directions through the coordinated operation of the detection circuit, the horizontal revolution mechanism, the signal reflection mechanism, and the pitch rotation mechanism. Furthermore, the embodiments of the present disclosure fix the entire detection circuit (equivalent to the main control board and high-frequency board in the prior art) onto the horizontal revolution mechanism. Thereby ensuring the synchronous horizontal movement of both the main control board and high-frequency board without a relative motion between them. Consequently, any communication cables or power cables connecting these boards remain entirely unaffected, minimizing cable degradation. This enhances the reliability of the 3D scan radar and extends its operational lifespan.

It should be noted that the rotation way of the rotating shaft of the pitch rotation mechanism and the rotational way of the horizontal revolution mechanism may be varied. Specific details are provided below.

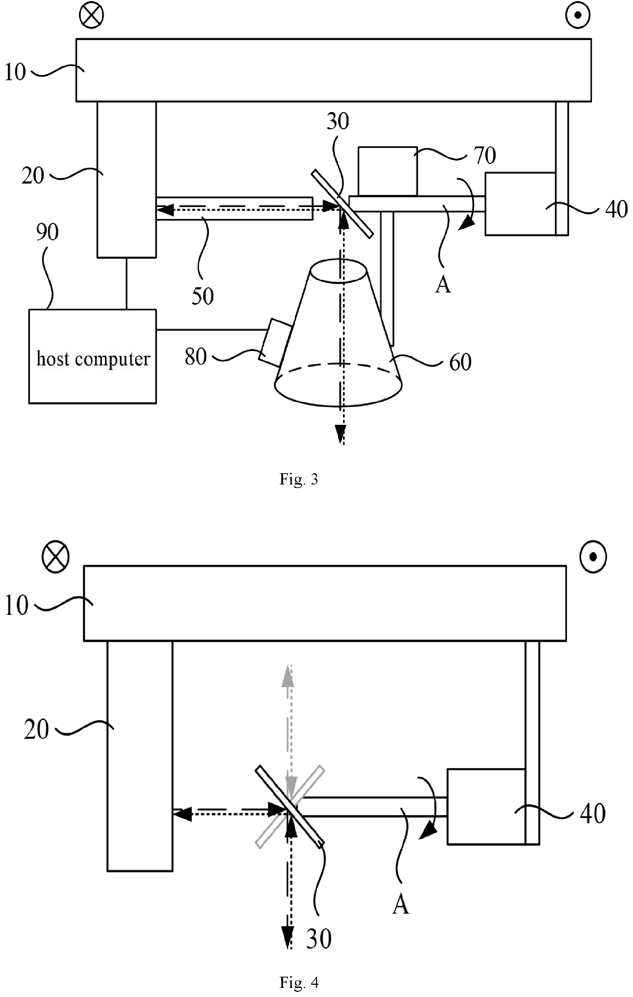

Fig. 4 illustrates a structural schematic of another pitch-reflective 3D scan radar provided by the present disclosure. Referring to Fig. 4, optionally, the rotating shaft continuously rotates in the pitch direction along a first predetermined direction. The detection circuit is specifically used to identify and calculate the material-level parameters of the material surface within the container based on the measurement signals and the return signals corresponding to the continuous rotation of the rotating shaft within a predetermined rotation range.

The first predetermined direction may be clockwise or counter-clockwise.

It should be understood that during the continuous rotation of the rotating shaft, the signal reflection mechanism fixed at the first mounting position of the rotating shaft also rotates continuously. Consequently, the measurement signals reflected by the signal reflection mechanism not only reaches the material surface but may also reach an inner wall and other structures (e.g., crossbeams, heating coils and/or access ladders) of the container, the horizontal revolution mechanisms, etc. This results in unnecessary computational costs for the 3D scan radar. However, the embodiment of the present disclosure may adaptively set a predetermined rotation range (e.g., [-90°, 90°]) according to actual operating conditions of the 3D scan radar. This ensures that the measurement signals reflected by the signal reflection mechanism reaches only the material surface, facilitating that detection circuit accurately calculates the material-level parameters within the container and the unnecessary computational costs are effectively avoided.

In another embodiment of the present application, optionally, the rotation of the rotating shaft may perform a reciprocating rotation within a first predetermined range.

If the actual operating conditions of this embodiment are the same as those of the 3D scan radar of the preceding embodiment, the first predetermined range may be equivalent to the aforementioned predetermined rotation range. Thus, this embodiment may adaptively set the first predetermined range according to the actual operating conditions of the 3D scan radar. This ensures that measurement signals reflected by the signal reflection mechanism reach only the material surface, facilitating that the detection circuit can accurately calculate the material-level parameters of the material surface within the container.

In a further embodiment of the present disclosure, the horizontal revolution mechanism may optionally rotate continuously along a second predetermined direction in the horizontal direction, or alternatively, the rotation of the horizontal revolution mechanism may perform a reciprocating rotation within the second predetermined range in the horizontal direction.

The second predetermined direction may be clockwise or counterclockwise. The second predetermined range may be adaptively adjusted according to the actual operating conditions of the 3D scan radar, with no limitation by this embodiment of the present disclosure. For example, the second predetermined range may be -90° to 100°.

In a further embodiment of the present disclosure, optionally, a housing and a cover are further provided. The housing and the cover are fixedly connected to form a sealed space. The horizontal revolution mechanism, the detection circuit, the signal reflection mechanism, and the pitch rotation mechanism are all positioned within the sealed space. The cover is configured to allow the measurement signals and the return signals to pass through.

The housing may be made by materials such as metal, plastic, ceramic, or glass. The cover may be fixed to the housing via a top screw, but the top screw is not exclusive. Additionally, the cover may be made by various materials. For example, if the 3D scan radar is the 3D microwave scan radar, the cover may be made by wave-transparent materials such as plastic, ceramic, or glass. If the 3D scan radar is the 3D laser scan radar, the cover may be made by laser-transparent materials, such as glass or polymeric methyl methacrylate (PMMA) sheet.

In the aforementioned embodiments, inventors found that in the existing 3D microwave scan radars, the circuitry and antennae are mutually independent and connected by a radiofrequency (RF) cable. When the antenna undergoes a mechanical motion to measure a surface profile of the material within a container, relative movement occurs between the circuitry and the antenna. Under such conditions, the RF cable is subjected to continuous flexing, readily leading to its ageing and failure. This not only diminishes the reliability of the 3D microwave scan radar but also shortens its operational lifespan.

In light of this, taking the 3D microwave scan radar as an example, Fig. 2 illustrates a structural diagram of another pitch-reflective 3D scan radar provided by an embodiment of the present disclosure. Referring to Fig. 2, optionally, the pitch-reflective 3D scan radar further comprises a waveguide structure 50.

The waveguide structure 50 is fixedly connected to the detection circuit 20 and/or the horizontal revolution mechanism 10. The waveguide structure 50 is used to direct the measurement signals transmitted by the detection circuit 20 towards the signal reflection mechanism 30, and the signal reflection mechanism 30 reflects the measurement signals towards the at least one measurement point of the material surface. The return signals formed by the at least one measurement point of the material surface is reflected by the signal reflection mechanism 30, and are directed to the detection circuit 20 through the waveguide structure 50.

Optionally, pitch-reflective 3D scan radar further comprises an antenna structure 60.

The antenna structure 60 is fixed at a second mounting position of the rotating shaft A by a connecting member, maintaining a fixed relative position with the signal reflection mechanism 30. The antenna structure 60 is used to converge and amplify the measurement signals reflected by the signal reflection mechanism 30 and then transmit the measurement signals. With the rotation of the horizontal revolution mechanism 10 and the pitch rotation mechanism 40, the measurement signals reach the at least one measurement point on the material surface. The return signals formed by the at least one measurement point is guided to the signal reflection mechanism 30, and is reflected by the signal reflection mechanism 30, and is ultimately received by the detection circuit 20.

The waveguide structure 50 may be any type of closed waveguide or open waveguide. The specific configuration of the waveguide structure 50 may be a hollow cylinder. The connecting member may connect the antenna structure 60 and the rotating shaft A by structures such as snap rings, clips, or threads.

It should be understood that to enhance the functions of the antenna structure 60 in converging and amplifying the measurement signals reflected by the signal reflection mechanism 30, as well as in collecting the return signals, the second mounting position may be adaptively adjusted based on factors such as the transmission direction of the measurement signals generated by the detection circuit 20, and the predetermined fixed angle formed between the transmission directions of the measurement signals generated by the detection circuit 20 and the signal reflection mechanism 30. In one embodiment of the present disclosure, after the second mounting position is determined, the transmission direction of the measurement signals reflected by the signal reflection mechanism 30 may be aligned with the central axis of the antenna structure 60.

By way of example, the operating principle of the 3D scan radar may be as follows.

The detection circuit 20 continuously or intermittently generates and transmits the measurement signals. The waveguide structure 50 directs the measurement signals transmitted by the detection circuit 20 towards the signal reflection mechanism 30. The signal reflection mechanism 30 reflects the measurement signals. The antenna structure 60 converges and amplifies the measurement signals reflected by the signal reflection mechanism 30 and then projects the measurement signals towards the material surface. The measurement signals form corresponding return signals by the at least one measurement point of the material surface. The antenna structure 60 directs the return signals to the signal reflection mechanism 30. The return signals are reflected by the signal reflection mechanism 30 and then directed by the waveguide structure 50 to the detection circuit 20. The detection circuit 20 calculates the material-level parameters of the material surface within the container based on the measurement signals and the return signals.

Specifically, the signal reflection mechanism 30 is fixedly connected to the first mounting position of the rotating shaft A of the pitch rotation mechanism 40, the antenna structure 60 is secured by the connecting member to the second mounting position of the rotating shaft A, and the relative position between the antenna structure 60 and the signal reflection mechanism 30 remains unchanged. Consequently, when the rotating shaft A is rotated in the pitch direction, both the signal reflection mechanism 30 and the antenna structure 60 are also rotated in the pitch direction following the rotation of the rotating shaft A. Furthermore, because the transmission direction of the measurement signals generated by the detection circuit 20 forms the predetermined fixed angle with respect to the signal reflection mechanism 30, the measurement signals reflected by the signal reflection mechanism 30 are reflected in a plurality of transmission angles in the pitch direction. Subsequently, the antenna structure 60 converges and amplifies the measurement signals reflected by the signal reflection mechanism 30 and then directing the measurement signals towards the material surface. With the rotation of the pitch rotation mechanism 40, the measurement signals reach the plurality of measurement points of the material surface in the pitch direction. The measurement signals having different transmission angles correspondingly generate return signals at the respective measurement points. The antenna structure 60 directs the return signals to the signal reflection mechanism 30. After reflection by the signal reflection mechanism 30, the waveguide structure 50 directionally guides the return signals to the detection circuit 20. The detection circuit 20 can then calculate the material-level parameters of the at least one measurement point of the material surface in the pitch direction based on the measurement signals and the return signals in the pitch direction, thereby achieving the scan measurement in the pitch direction for the 3D scan radar.

The pitch rotation mechanism 40 is positioned at the first predetermined position of the horizontal revolution mechanism 10, the detection circuit 20 is fixed at the second predetermined position of the horizontal revolution mechanism 10, the signal reflection mechanism 30 is fixedly connected to the first mounting position of the rotating shaft A of the pitch rotation mechanism 40, the waveguide structure 50 is fixedly connected to the detection circuit 20 and/or the horizontal revolution mechanism 10, and the antenna structure 60 is fixed at the second mounting position of the rotating shaft A via the connecting member. Consequently, during the horizontal rotation of the horizontal revolution mechanism 10, the detection circuit 20, the signal reflection mechanism 30, the pitch rotation mechanism 40, the waveguide structure 50, and the antenna structure 60 all synchronously rotate horizontally with the horizontal revolution mechanism 10. This arrangement enables the measurement signal to transmit at a plurality of transmission angles in the horizontal direction. Subsequently, the antenna structure 60 converges and amplifies the measurement signals reflected by the signal reflection mechanism 30 and directs the measurement signals towards the material surface. With the rotation of the horizontal revolution mechanism 10, the measurement signals reach the plurality of measurement points located in the horizontal direction. The measurement signals having different transmission angles correspondingly generate the return signals at the respective measurement points. The antenna structure 60 directs the return signals to the signal reflection mechanism 30. After reflection by the signal reflection mechanism 30, the waveguide structure 50 directionally guides the return signals to the detection circuit 20. The detection circuit 20 then calculates the material-level parameters of the at least one measurement point of the material surface in the horizontal direction based on the measurement signals and return signals, thereby achieving horizontal scan measurement for the 3D scan radar.

The embodiments of the present disclosure can perform the 3D scan measurement of the material surface within the container in both horizontal direction and the pitch direction, through the coordinated operation of the detection circuit, the waveguide structure, the antenna structure, the horizontal revolution mechanism, the signal reflection mechanism, and the pitch rotation mechanism. In the embodiments of the present disclosure, the detection circuit (equivalent to the main control board and the high-frequency board in the prior art) is integrally fixed to the horizontal revolution mechanism. Consequently, both the main control board and the high-frequency board execute a synchronous horizontal motion without the relative movement between them. Even if communication or power cables connect these boards, the cables remain entirely unaffected, thereby reducing cable losses. Finally, the detection circuit and the antenna structure of the 3D scan radar provided by the embodiments of the present disclosure require no the connection of the RF cable, thereby eliminating the risk of premature fatigue failure of the RF cable resulting from continuous flexing. The embodiments of the present disclosure address some problems such as the low reliability and the short service life in existing 3D scan radars. Consequently, the reliability of the 3D scan radar is enhanced, and its lifespan is extended.

It should be noted that Fig. 2 merely illustrates the antenna structure 60 as a horn antenna, which does not constitute a limitation on the embodiments of the present disclosure. For example, the antenna structure 60 may also be a lens antenna or the like.

It should also be noted that during the continuous operation of the 3D scan radar, the antenna structure fixed at the second mounting position of the rotating shaft via connecting member will subject the rotating shaft to unilateral stress. Over time, non-uniform load distribution on the rotating shaft accelerates the fatigue failure of the pitch rotation mechanism, potentially resulting in the structural damage of the pitch rotation mechanism. Accordingly, the inventors creatively propose adding counterweights to the opposite side of the second mounting position of the rotating shaft to prevent ageing or even damage to the pitch rotation mechanism. Specifically, referring to Fig. 2 again, the 3D scan radar optionally further includes a counterweight balancing member 70. The counterweight balancing member is fixed at a third mounting position of the rotating shaft A, serving to counterbalance the weight of the antenna structure 60 (and/or the connecting member). The second mounting position and third mounting position are situated on axially symmetrical opposite sides of the rotating shaft A.

Based on the foregoing embodiments, as described in the background art, the inventors further observed that a high-frequency board is mounted onto the antenna in the existing 3D scan radars. The microwave signals generated by this high-frequency board are transmitted through the antenna. Simultaneously, the antenna must be fixed to a pitch movement device or a pitch movement bracket. This pitch movement device or the pitch movement bracket is connected to a horizontal movement device or a horizontal movement bracket and follows the horizontal movement device or the horizontal movement bracket to move horizontally, enabling the antenna to transmit the microwave signals from multiple angles in two dimensions to perform a 3D detection. However, because the main control board of the 3D scan radar is typically positioned on the horizontal movement device or the horizontal movement bracket, there is a relative movement between the main control board and the high-frequency board. The relative movement will affect communication cables, power supply cables, etc. for connecting the main control board and the high-frequency board, and thus significant losses will occur due to the relative movement. The situation severely impacts the service life and reliability of the 3D scan radars.

In light of this, continuing with the example of 3D microwave scan radars and referring again to Fig. 2, the detection circuit 20 may include a signal transceiver circuit and a main control circuit (not shown in Fig. 2).

The signal transceiver circuit and the waveguide structure 50 are disposed opposite to each other. The signal transceiver circuit is used to generate the measurement signals and receive the return signals. The measurement signals generated by the signal transceiver circuit are directionally transmitted via the waveguide structure 50 to the signal reflection mechanism 30. After reflection by the signal reflection mechanism 30, the measurement signals reach the at least one measurement point of the material surface. The return signals formed by the at least one measurement point of the material surface are reflected by the signal reflection mechanism 30 and directionally guided by the waveguide structure 50 to the signal transceiver circuit.

The main control circuit is mounted on the horizontal revolution mechanism 10. The main control circuit remains a fixed relative position with respect to the signal transceiver circuit, the horizontal revolution mechanism 10, and the pitch rotation mechanism 40. The cables connecting the main control circuit with the signal transceiver circuit, the horizontal revolution mechanism 10, and the pitch rotation mechanism 40 do not undergo the relative movement. The main control circuit is at least used to realize control, communication and/or power supply functions between the signal transceiver circuit, the horizontal revolution mechanism 10 and the pitch rotation mechanism 40, enabling the normal operation of the signal transceiver circuit, the horizontal revolution mechanism 10 and the pitch rotation mechanism 40. The main control circuit is used to acquire the revolution information of the horizontal revolution mechanism 10, the rotation information of the pitch rotation mechanism 40 and the return signals transmitted by the signal transceiver circuit, and obtain the material-level parameters of the at least one measurement point of the material surface based on the revolution information of the horizontal revolution mechanism 10, the rotation information of the pitch rotation mechanism 40 and the return signals transmitted by the signal transceiver circuit.

Optionally, the 3D scan radar further includes a host computer 90. The host computer 90 is connected to the main control circuit, receives the material-level parameters of the at least one measurement point of the material surface, the rotation information of the horizontal revolution mechanism 10 and the rotation information of the pitch rotation mechanism 40 transmitted by the main control circuit, and further analyzes 3D spatial information of the material surface.

The host computer 90 may be selected from microcontrollers, industrial control computers, etc. The revolution information of the horizontal revolution mechanism 10 may be the revolution angles of the horizontal revolution mechanism 10 corresponding to all measurement points on the material surface. The rotation information of the pitch rotation mechanism 40 may be the rotation angles of the pitch rotation mechanism 40 corresponding to all measurement points on the material surface. the 3D spatial information of the material surface may be displayed through a 3D morphology diagram of the material surface.

By way of example, the operating principle of the 3D scan radar may be as follows.

The signal transceiver circuit continuously or intermittently generates and transmits the measurement signals. The waveguide structure 50 directs the measurement signals transmitted by the signal transceiver circuit towards the signal reflection mechanism 30. The signal reflection mechanism 30 reflects the measurement signals. The antenna structure 60 converges and amplifies the measurement signals reflected by the signal reflection mechanism 30 and then directs the measurement signals towards the material surface. The at least one measurement point on the material surface reflect the measurement signals to form the corresponding return signals. The antenna structure 60 directs the return signals back to the signal reflection mechanism 30. The return signals are reflected by the signal reflection mechanism 30 and then are directionally guided by the waveguide structure 50 to the signal transceiver circuit. The main control circuit acquires the revolution information of the horizontal revolution mechanism 10, the rotation information of the pitch rotation mechanism 40 and the return signals transmitted by the signal transceiver circuit, and obtains the material-level parameters of the multiple measurement points on the material surface based on the information and the return signals. The host computer 90 receives the material-level parameters of multiple measurement points on the material surface, the revolution information of the horizontal revolution mechanism 10 and the rotation information of the pitch rotation mechanism 40 transmitted by the main control circuit, and further analyze the 3D spatial information of the material surface.

Specifically, The signal reflection mechanism 30 is fixedly connected to the first mounting position of the rotating shaft A of the pitch rotation mechanism 40, and the antenna structure 60 is fixed by the connecting members to the second mounting position of the rotating shaft A while maintaining a constant relative position with respect to the signal reflection mechanism 30.Thus, when the rotating shaft A rotates in the pitch direction, the signal reflection mechanism 30 and the antenna structure 60 are rotated following the rotating shaft A in the pitch direction. Furthermore, because the transmission direction of the measurement signals generated by the signal transceiver circuit form a predetermined fixed angle with the signal reflection mechanism 30, the measurement signals reflected by the signal reflection mechanism 30 form multiple transmission angles in the pitch direction. Subsequently, the antenna structure 60 converges and amplifies the measurement signals reflected by the signal reflection mechanism 30 and then directs the measurement signals towards the material surface. Following the rotation of the pitch rotation mechanism 40, the measurement signals reach multiple measurement points located in the pitch direction. The measurement signals having the different transmission angles correspondingly generate the return signals at the respective measurement points. The antenna structure 60 guides the return signals to the signal reflection mechanism 30. The return signals are reflected by the signal reflection mechanism 30. Then, the waveguide structure 50 directs the return signals towards the signal transceiver circuit. The main control circuit acquires the rotation information of the pitch rotation mechanism 40 and the return signals transmitted by the signal transceiver circuit, and obtains the material-level parameters of the at least one measurement point of the material surface located in the pitch direction. This achieves the scan measurement in the pitch direction of the 3D scan radar.

Furthermore, the pitch rotation mechanism 40 is positioned at the first predetermined position of the horizontal revolution mechanism 10, the signal transceiver circuit and main control circuit (i.e., the detection circuit 20) are fixed at the second predetermined position of the horizontal revolution mechanism 10, the signal reflection mechanism 30 is fixedly connected to the first mounting position of the rotating shaft A of the pitch rotation mechanism 40, the waveguide structure 50 is fixedly connected to the detection circuit 20 and/or the horizontal revolution mechanism 10, and the antenna structure 60 is fixed at the second mounting position of the rotating shaft A via the connecting members. Therefore, during the horizontal rotation of the horizontal revolution mechanism 10, the signal transceiver circuit, the main control circuit, the signal reflection mechanism 30, the pitch rotation mechanism 40, the waveguide structure 50 and the antenna structure 60 are all synchronously rotated horizontally following the horizontal rotation of the horizontal revolution mechanism 10. Consequently, the measurement signal forms the multiple transmission angles in the horizontal direction. Subsequently, the antenna structure 60 converges and amplifies the measurement signals reflected by the signal reflection mechanism 30 and then directs the measurement signals towards the material surface. Following the rotation of the horizontal revolution mechanism 10, the measurement signals reach the multiple measurement points located in the horizontal direction. The return signals are formed by the measurement signals with the different transmission angles reflected by the respective measurement points. The antenna structure 60 directs the return signals to the signal reflection mechanism 30. After reflection by the signal reflection mechanism 30, the waveguide structure 50 directs the return signals towards the signal transceiver circuit. The main control circuit acquires the revolution information of the horizontal revolution mechanism 10 and the return signals transmitted by the signal transceiver circuit, and obtains the material-level parameters of the at least one measurement point located in the horizontal direction based on the rotation information of the horizontal revolution mechanism 10 and the return signals. This achieves the scan measurement of the 3D scan radar in the horizontal direction.

In summary, the relative positions of the main control circuit mounted on the horizontal revolution mechanism, the signal transceiver circuit, the horizontal revolution mechanism and the pitch rotation mechanism remain unchanged, and the cables connecting the main control circuit to the signal transceiver circuit, the horizontal revolution mechanism and the pitch rotation mechanism do not undergo a relative movement. Therefore, the cables between the main control circuit and the signal transceiver circuit do not incur significant losses. This facilitates enhancing the reliability of the 3D scan radar and extending the service life of the 3D scan radar.

As a supplement to the foregoing embodiments, Fig. 3 illustrates another structural configuration for a pitch-reflective 3D scan radar provided by the present disclosure. Referring to Fig. 3, optionally, the configuration further includes an angle monitoring module 80.

The angle monitoring module 80 is fixedly connected to the rotating shaft A, the signal reflection mechanism 30 or the antenna structure 60, and electrically connected to the main control circuit. The angle monitoring module 80 is used to acquire the actual rotation angle parameters of the 3D scan radar in the pitch direction, enabling the main control circuit to calibrate and correct the rotation information of the pitch direction of the pitch rotation mechanism 40 based on the actual revolution angle parameters. The angle monitoring module 80 also acquires the actual revolution angle parameters of the horizontal revolution mechanism 10 in the horizontal direction.

The actual rotation angle parameters include at least one of rotation angles or rotation steps. The actual revolution angle parameters include at least one of revolution angles or revolution steps.

Optionally, the master control circuit is mounted on the horizontal revolution mechanism 10, and remains a fixed relative position with respect to the signal transceiver circuit, the horizontal revolution mechanism 10 and the pitch rotation mechanism 40. The cables connecting the master control circuit to the signal transceiver circuit, the horizontal revolution mechanism 10 and the pitch rotation mechanism 40 do not undergo a relative motion. The master control circuit electrically connects to the angle monitoring module 80. The master control circuit is at least used to realize control, communication and/or power supply functions between the signal transceiver circuit, the horizontal revolution mechanism 10, the pitch rotation mechanism 40 and the angle monitoring module 80, thereby enabling the normal operation of the signal transceiver circuit, the horizontal revolution mechanism 10, the pitch rotation mechanism 40 and the angle monitoring module 80. Furthermore, the master control circuit acquires the actual rotation angle parameters and the actual revolution angle parameters obtained from the angle monitoring module 80, along with the return signals transmitted by the signal transceiver circuit, to obtain the material-level parameters of at least one measurement point on the material surface.

Optionally, the 3D scan radar further comprises a host computer 90. The host computer 90 is connected to both the main control circuit and the angle monitoring module 80. The host computer 90 is used to receive the material-level parameters of at least one measurement point transmitted by the main control circuit, along with the actual rotation angle parameters and actual revolution angle parameters transmitted by the angle monitoring module 80, thereby obtaining the 3D spatial information of the material surface.

The angle monitoring module 80 may be anyone type of angle sensors.

By way of example, the operating principle of the 3D scan radar may be as follows.

The signal transceiver circuit continuously or intermittently generates and transmits the measurement signals. The waveguide structure 50 directs the measurement signals transmitted by the signal transceiver circuit towards the signal reflection mechanism 30. The signal reflection mechanism 30 reflects the measurement signals. The antenna structure 60 converges and amplifies the measurement signals reflected by the signal reflection mechanism 30 and then directs the measurement signals towards the material surface. The at least one measurement point on the material surface reflects the measurement signals to correspondingly form the return signals. The antenna structure 60 directs the return signals back to the signal reflection mechanism 30. The return signals are reflected by the signal reflection mechanism 30 and then directionally guided by the waveguide structure 50 to the signal transceiver circuit. The angle monitoring module 80 acquires in real time the actual rotation angle parameters of the 3D scan radar in the pitch direction and the actual revolution angle parameters of the horizontal revolution mechanism 10 in the horizontal direction. The main control circuit obtains and based on the actual rotation angle parameters and actual revolution angle parameters acquired by the angle monitoring module 80 and the return signals transmitted by the signal transceiver circuit, derives the material-level parameters of the at least one measurement point of the material surface. The host computer 90 receives the material-level parameters of the at least one measurement point on the material surface transmitted by the main control circuit, along with the actual rotation angle parameters and actual revolution angle parameters transmitted by the angle monitoring module 80, to analyze the 3D spatial information of the material surface.

Specifically, the signal reflection mechanism 30 is fixedly connected to the first mounting position of the rotating shaft A of the pitch rotation mechanism 40, the antenna structure 60 is fixed via the connecting members at the second mounting position of the rotating shaft A while maintaining the constant relative position to the signal reflection mechanism 30. Therefore, when the rotating shaft A rotates in the pitch direction, the signal reflection mechanism 30 and antenna structure 60 is rotated in the pitch direction following the rotation of the rotating shaft A. Furthermore, because the transmission direction of the measurement signals generated by the signal transceiver circuit form a predetermined fixed angle with respect to the signal reflection mechanism 30, the measurement signals reflected by the signal reflection mechanism 30 form multiple transmission angles in the pitch direction. Subsequently, the antenna structure 60 converges and amplifies the measurement signals reflected by the signal reflection mechanism 30 and then directs the measurement signals towards the material surface. With the rotation of the pitch rotation mechanism 40, the measurement signals reach the multiple measurement points located in the pitch direction. The return signals will be formed at the respective measurement points based on the measurement signals having different transmission angles. The antenna structure 60 directs the return signals to the signal reflection mechanism 30. After reflection by the signal reflection mechanism 30, the waveguide structure 50 directs the return signals towards the signal transceiver circuit. The angle monitoring module 80 acquires the actual rotation angle parameters of the 3D scan radar in the pitch direction in real time. The main control circuit obtains and, based on the actual rotation angle parameters and the return signals transmitted by the signal transceiver circuit, derives the material-level parameters of the at least one measurement point located in the pitch direction. This thereby achieves the scan measurement in the pitch direction by the 3D scan radar.

Furthermore, the pitch rotation mechanism 40 is positioned at the first predetermined position of the horizontal revolution mechanism 10, and the signal transceiver circuit and the main control circuit (i.e., detection circuit 20) are fixed at the second predetermined position of the horizontal revolution mechanism 10, the signal reflection mechanism 30 is fixedly connected to the first mounting position on the rotating shaft A of the pitch rotation mechanism 40, the waveguide structure 50 is fixedly connected to the detection circuit 20 and/or the horizontal revolution mechanism 10, and the antenna structure 60 is fixed at the second mounting position of the pivot section A via connecting members. Consequently, during the horizontal rotation of the horizontal revolution mechanism 10, the signal transceiver circuit, the main control circuit, the signal reflection mechanism 30, the pitch rotation mechanism 40, the waveguide structure 50, and the antenna structure 60 all synchronously rotate horizontally with the horizontal revolution mechanism 10. Consequently, the measurement signals are transmitted at multiple transmission angles in the horizontal direction. Subsequently, the antenna structure 60 converges and amplifies the measurement signals reflected by the signal reflection mechanism 30 and then directs the measurement signals towards the material surface. As the horizontal revolution mechanism 10 rotates, the measurement signals reach the multiple measurement points located in the horizontal direction. The various measurement signals with different transmission angles correspondingly generate the return signals at the respective measurement points. The antenna structure 60 directs the return signals to the signal reflection mechanism 30. After reflection by the signal reflection mechanism 30, the waveguide structure 50 directionally guides the return signals to the signal transceiver circuit. The angle monitoring module 80 acquires the actual horizontal revolution angle parameters of the horizontal revolution mechanism 10 in real time. The main control circuit acquires and, based on the actual revolution angle parameters and the return signals transmitted by the signal transceiver circuit, obtains the material-level parameters of the at least one measurement point on the material surface in the horizontal direction. This thereby achieves the horizontal scan measurement of the 3D scan radar.

On the one hand, in the embodiments of the present disclosure, the relative positions of the main control circuit mounted on the horizontal revolution mechanism, the signal transceiver circuit, the horizontal revolution mechanism, and the pitch rotation mechanism remain unchanged. Furthermore, the cables connecting the main control circuit to the signal transceiver circuit, the horizontal revolution mechanism, and the pitch rotation mechanism do not undergo relative movement, thereby minimizing cable loss between the main control circuit and the signal transceiver circuit. This enhances the reliability of the 3D scan radar and extends the operational lifespan. Furthermore, the present disclosure obtains the actual rotation angle parameters of the 3D scan radar in the pitch direction via the angle monitoring module. This enables the main control circuit to calibrate and correct the rotation information of the pitch rotation mechanism in the pitch direction based on the actual angle parameters, thereby further enhancing the scanning accuracy of the 3D scan radar.

It should be noted that Figs. 1, 2, 3, and 4 are illustrative examples showing the rotation direction of the pitch rotation mechanism 40 (viewed along the line of sight from the detection circuit 20 towards the signal reflection mechanism 30) as clockwise, and the revolution direction of the horizontal revolution mechanism 10 (viewed along the line of sight from the detection circuit 20 towards the horizontal revolution mechanism 10) as counter-clockwise. These orientations are not intended to limit the scope of the embodiments of the present disclosure.

It should be understood that the various forms of the flowcharts shown above may be employed, with steps being reordered, added, or deleted. For instance, the steps described herein may be executed in parallel, sequentially, or in different orders, provided that the desired outcome of the technical solution of the present disclosure is achieved. This document does not impose any restrictions in this regard.

The specific embodiments described above do not constitute limitations on the scope of protection of the present disclosure. Those skilled in the art will appreciate that various modifications, combinations, sub combinations, and substitutions may be made based on design requirements and other factors. Any modifications, equivalent substitutions, and improvements made within the spirit and principles of the present disclosure shall be included within the scope of protection of the present disclosure.

## Claims

1. A pitch-reflective 3D scan radar, **characterized in that** comprising:
a horizontal revolution mechanism,
a detection circuit,
a signal reflection mechanism, and
a pitch rotation mechanism,
wherein the pitch rotation mechanism is disposed at a first predetermined position of the horizontal revolution mechanism, and a rotating shaft of the pitch rotation mechanism is controlled to rotate in a pitch direction,
wherein the detection circuit is fixed at a second predetermined position of the horizontal revolution mechanism, at least generates and transmits measurement signals and receives return signals, and calculates material-level parameters of a material surface within a container based on the measurement signals and the return signals,
wherein the signal reflection mechanism is fixedly connected to a first mounting position of the rotating shaft and forms a predetermined fixed angle with respect to a transmission direction of the measurement signals generated by the detection circuit, the signal reflection mechanism is used to, with a revolution of the horizontal revolution mechanism and the rotation of the pitch rotation mechanism, reflect the measurement signals transmitted by the detection circuit to at least one measurement point of the material surface, and the signal reflection mechanism is further used to reflect the return signals to the detection circuit and the detection circuit receives the return signals to obtain the material-level parameters of the at least one measurement point, wherein the at least one measurement point reflects the measurement signals to form the return signals,
wherein the horizontal revolution mechanism drives the detection circuit, the signal reflection mechanism and the pitch rotation mechanism to perform synchronized horizontal revolution when the horizontal revolution mechanism is controlled to rotate in a horizontal direction.

2. The 3D scan radar of claim 1, **characterized in that** further comprising a waveguide structure, wherein the waveguide structure is fixedly connected to the detection circuit and/or the horizontal revolution mechanism, the waveguide structure is used to direct the measurement signals transmitted by the detection circuit towards the signal reflection mechanism, the signal reflection mechanism then reflects the measurement signals to the at least one measurement point, the at least one measurement point reflects the measurement signals to form the return signals, the signal reflection mechanism reflects the return signals to the waveguide structure, and the waveguide structure directs the return signals to detection circuit.

3. The 3D scan radar of claim 1, **characterized in that** further comprising an antenna structure, wherein,
the antenna structure is fixed to a second mounting position of the rotating shaft by a connecting member,
a relative position between the antenna structure and the signal reflection mechanism remains unchanged,
the antenna structure is used to converge and amplify the measurement signals reflected by the signal reflection mechanism and then transmit the measurement signals, wherein with the revolution of the horizontal revolution mechanism and the rotation of the pitch rotation mechanism, the measurement signals reach the at least one measurement points, and
the antenna structure is also used to guide the return signals formed by the at least one measurement points to the signal reflection mechanism, wherein the return signals are reflected by the signal reflection mechanism, and ultimately received by the detection circuit.

4. The 3D scan radar of claim 3, **characterized in that** further comprising a counterweight balancing member, wherein the counterweight balancing member is fixed at a third mounting position of the rotating shaft and used to balance a weight of the antenna structure, wherein the second mounting position and the third mounting position are respectively located on axially symmetrical opposite sides of the rotating shaft.

5. The 3D scan radar of claim 2, **characterized in that** the detection circuit comprises a signal transceiver circuit and a main control circuit,
the signal transceiver circuit and the waveguide structure are disposed opposite to each other, the signal transceiver circuit is used to generate the measurement signals and receive the return signals, the measurement signals generated by the signal transceiver circuit are directionally transmitted via the waveguide structure to the signal reflection mechanism, after reflection by the signal reflection mechanism, the measurement signals reach the at least one measurement point of the material surface, and the return signals formed by the at least one measurement point of the material surface are reflected by the signal reflection mechanism and directionally guided by the waveguide structure to the signal transceiver circuit,
the main control circuit is mounted on the horizontal revolution mechanism, the main control circuit remains a fixed relative position with respect to the signal transceiver circuit, the horizontal revolution mechanism and the pitch rotation mechanism, cables connecting the main control circuit with the signal transceiver circuit, the horizontal revolution mechanism and the pitch rotation mechanism do not undergo a relative movement, the main control circuit is at least used to realize control, communication and/or power supply functions with the signal transceiver circuit, the horizontal revolution mechanism and the pitch rotation mechanism, enabling a normal operation of the signal transceiver circuit, the horizontal revolution mechanism and the pitch rotation mechanism, and the main control circuit is used to acquire revolution information of the horizontal revolution mechanism, a rotation information of the pitch rotation mechanism and the return signals transmitted by the signal transceiver circuit, and obtain the material-level parameters of the at least one measurement point of the material surface based on the revolution information, the rotation information and the return signals.

6. The 3D scan radar of claim 5, **characterized in that** further comprising an angle monitoring module, wherein,
the angle monitoring module is fixedly connected to the rotating shaft, the signal reflection mechanism or the antenna structure, and is electrically connected to the main control circuit, the angle monitoring module is used to acquire actual rotation angle parameters of the 3D scan radar in the pitch direction, enabling the main control circuit to calibrate and correct the rotation information of the pitch rotation mechanism in the pitch direction based on the actual rotation angle parameters; and the angle monitoring module is used to obtain actual revolution angle parameters of the horizontal revolution mechanism in the horizontal direction,
wherein the actual rotation angle parameters at least comprise rotation angles or rotation steps, and the actual revolution angle parameters at least comprise revolution angle or revolution steps.

7. The 3D scan radar of claim 6, **characterized in that**,
the main control circuit is mounted on the horizontal revolution mechanism,
the main control circuit remains a fixed relative position with respect to the signal transceiver circuit, the horizontal revolution mechanism and the pitch rotation mechanism,
the cables connecting the main control circuit to the signal transceiver circuit, the horizontal revolution mechanism, and the pitch rotation mechanism do not undergo the relative movement,
the main control circuit is electrically connected to the angle monitoring module, and is at least used to realize the control, communication and/or power supply functions with the signal transceiver circuit, the horizontal revolution mechanism, the pitch rotation mechanism and the angle monitoring module, enabling the normal operation of the signal transceiver circuit, the horizontal revolution mechanism, the pitch rotation mechanism and the angle monitoring module,
the main control circuit is used to obtain the actual rotation angle parameters and the actual revolution angle parameters from the angle monitoring module, obtain the return signals from the signal transceiver circuit, and obtain the material-level parameters of at least one measurement point of the material surface.

8. The 3D scan radar of claim 7, **characterized in that** further comprising a host computer, wherein,
the host computer is connected to the main control circuit to receive the material-level parameters from said main control circuit, the revolution information from the horizontal revolution mechanism, and the rotation information from said pitch rotation mechanism, to analyze a 3D spatial information of the material surface, or
the host computer is connected to both the main control circuit and the angle monitoring module to receive the material-level parameters from the main control circuit, the actual rotation angle parameters and the actual revolution angle parameters from the angle monitoring module, and, to analyze the 3D spatial information of the material surface.

9. The 3D scan radar of claim 1, **characterized in that** further comprising a housing and a cover, wherein,
the housing is fixedly connected to the cover to form a sealed space,
the horizontal revolution mechanism, the detection circuit, the signal reflection mechanism, and the pitch rotation mechanism are all disposed within the sealed space, and
the cover is configured to be penetrated by the measurement signals and the return signals.

10. The 3D scan radar of claim 1, **characterized in that** the rotating shaft is controlled to continuously rotate along a first predetermined direction in the pitch direction,
the detection circuit is configured to identify the measurement signals and the return signals corresponding to a continuous rotation of the rotating shaft within a predetermined rotational range, and calculate the material-level parameters of the material surface within the container based on the measurement signals and the return signals.

11. The 3D scan radar of claim 1, **characterized in that** the rotating shaft is controlled to perform a reciprocating rotation within a first predetermined range.

12. The 3D scan radar of claim 1, **characterized in that**,
the horizontal revolution mechanism is controlled to continuously rotate along a second predetermined direction in the horizontal direction, or
the horizontal revolution mechanism is controlled to perform a reciprocating rotation within a second predetermined range in the horizontal direction.
